**Europäisches Patentamt**

**European Patent Office**

**Office européen des brevets**

(19)

(11) Veröffentlichungsnummer : **0 342 473 B1**

# EUROPÄISCHE PATENTSCHRIFT

(12)

(45) Veröffentlichungstag der Patentschrift :
**29.01.92 Patentblatt 92/05**

(51) Int. Cl.⁵ : **B29C 41/08,** B29D 9/00,
// B29K75:00, B29L31:58

(21) Anmeldenummer : **89108276.0**

(22) Anmeldetag : **09.05.89**

(54) **Verfahren zur Herstellung von Elastomerhäuten als Verkleidungsmaterial für Kunststoff-Formkörper, z.B. Kraftfahrzeug-Armaturentafeln.**

(30) Priorität : **14.05.88 DE 3816553**
**21.04.89 DE 3913157**

(43) Veröffentlichungstag der Anmeldung :
**23.11.89 Patentblatt 89/47**

(45) Bekanntmachung des Hinweises auf die
Patenterteilung :
**29.01.92 Patentblatt 92/05**

(84) Benannte Vertragsstaaten :
**BE DE ES FR GB IT LU NL SE**

(56) Entgegenhaltungen :
**DE-B- 1 112 827**
**GB-A- 1 123 702**
**US-A- 4 681 712**

(73) Patentinhaber : **FIRMA GÜNTHER TRÖSTER**
**Tannenweg 6**
**W-8613 Breitengüssbach (DE)**

(72) Erfinder : **Tröster, Günther**
**Tannenweg 6**
**W-8613 Breitengüssbach (DE)**

(74) Vertreter : **Kessel, Egbert, Dipl.-Ing. et al**
**Patentanwälte Dipl.-Ing. E. Kessel Dipl.-Ing. V.**
**Böhme Karolinenstrasse 27**
**W-8500 Nürnberg 1 (DE)**

EP 0 342 473 B1

## Beschreibung

Die Erfindung betrifft ein Verfahren zur Herstellung von Elastomerhäuten als Verkleidungsmaterial für Kunststoff-Formkörper, z.B. Kraftfahrzeug-Armaturentafeln, bei dem in eine von einem Arbeitsmodell abgenommene Vorform zunächst ein Trennmittel und dann ein Polyurethan-System eingebracht wird, dem zwecks Bildung einer handhabbaren, lagerstabilen Elastomerhaut vernetzungsfördernde und vernetzend wirkende Mittel beigegeben werden, wobei nach Ablauf der Reaktion die Elastomerhaut entformt und in einer Endform zu einem Kunststoff-Formkörper fertigverarbeitet wird.

Derartige aus der offengelegten PCT-Anmeldung WO 87/00482 bekannte Elastomerhäute als Verkleidungsmaterial für Kunststoff-Formkörper spielen vor allem für die Innenverkleidung von Kraftfahrzeugen eine Rolle. Ihre Herstellung soll daher nachstehend auf diesen Anwendungsfall bezogen dargestellt werden, ohne allerdings darauf beschränkt zu sein ; als weitere Anwendungsfälle kommen z.B. Auflagen für medizinische Liegen, Umhüllungen von Weichschäumen insbesondere für den Einsatz in der Polsterindustrie usw. in Betracht.

Da heutzutage ein erheblicher Teil der Frei- und/oder Arbeitszeit im Auto zugebracht wird, besteht das Bedürfnis, den Innenraum von Kraftfahrzeugen so komfortabel wie möglich zu gestalten. Das führt dazu, daß die Oberfläche der Innenverkleidung vor allem im Sicht- und Griffbereich, d.h. also an der Armaturentafel, der Mittelkonsole, dem Handschuhkastendeckel, den Säulenverkleidungen, der Lenkradummantelung usw., ein gutes Aussehen und eine angenehme Griffigkeit (sogenannter "soft touch") aufweisen muß. Die angenehme Griffigkeit bzw. Haptik wird durch die Wahl bestimmter Kunststoffe erreicht, während das gute Aussehen oftmals recht komplexe Formen der Elastomerhäute erfordert.

Bei einem bekannten Verfahren zur Herstellung von Kaschierhäuten für Kunststoff-Formkörper werden tiefgezogene Kunststoffolien verwendet, deren Zuschnitte zunächst erhitzt, dann mittels Vakuum auf eine Matrize aufgezogen und schließlich durch Aufsprühen kalten Wassers bis zur Formstabilität abgekühlt werden. Dieses bekannte Verfahren weist jedoch etliche Nachteile auf. So entstehen beim Tiefziehen Bereiche unterschiedlicher Dicke, die mitunter bis an die Streckgrenze heranreichen und in denen beim Abkühlen mechanische Spannungen einfrieren; diese Bereiche sind Schwächezonen, an denen die Kaschierhäute vor allem beim Auftauen der eingefrorenen Spannungen bevorzugt reißen. Um die Tiefziehfähigkeit zu verbessern bzw. die Streckgrenze hinauszuschieben, werden bei solchen Folien die Weichmacheranteile erhöht ; die dadurch bei Wärmeeinwirkung erfolgende Weichmacherverdampfung führt zum Beschlagen der Frontscheiben (sogenanntes "fogging"). Weitere Nachteile der nach diesem Verfahren hergestellten Häute sind hohe Schwindung, negative Haptik und starke Beschränkung der gestalterischen Möglichkeiten (keine Ziernähte, kein Lederaussehen, kaum helle Farben möglich).

Um diesen Mängeln wenigstens teilweise abzuhelfen, sind die sogenannten Slush-Verfahren entwickelt worden, bei denen in einer auf etwa 220-240°C erhitzten Galvanoform Polyvinylchlorid-Weichmachergemische zunächst angesintert werden, dann der Überschuß abgegossen oder abgesaugt und schließlich das Gemisch in der Form ausgeliert und auf etwa 60°C abgekühlt wird ; dabei kommen sowohl flüssige Systeme (Liquid-Slush) mit hohem Monomerweichmacheranteil als auch pulverförmige Systeme (Powder-Slush) mit Polymerweichmacheranteil in Betracht. Die Temperaturbeständigkeit und die gestalterischen Möglichkeiten sind bei derart hergestellten Häuten verbessert. Nach wie vor kritisch bleiben jedoch die Schwindung und die Verwendung heller Farben (Gefahr der Vergilbung bis Zersetzung) ; zusätzliche Nachteile sind die Emission von Chlorwasserstoff im Brandfall sowie der hohe Aufwand an Formen und Fertigungseinrichtungen, was sich vor allem beiniedrigen Stückzahlen ungünstig auswirkt.

Schließlich wird zur Herstellung von Polyurethan-Formkörpern bzw. -teilen im Kraftfahrzeugbau die sogenannte In-Mould- Lackiertechnik eingesetzt, deren am häufigsten angewandte Verfahrensvariante das eingangs skizzierte In-Mould-Coating ist, wie es sich bsp. aus der offengelegten PCT-Anmeldung WO 87/00482 ergibt. Bei diesem bekannten Verfahren wird die aus einem flexiblen Werkstoff bestehende Vorform nach dem Abnehmen vom Urmodell und vor dem Einbringen des Trennmittels und des Polyurethan-Systems "ausgelegt", d.h. durch Biegen so verformt, daß alle Bereiche ihrer Innenseite, und zwar vor allem tiefe Vorsprünge mit geringem Innenquerschnitt, für den Sprühstrahl des Spritzwerkzeugs zugänglich sind. Erst dann werden das Trennmittel und das eine einzige Schicht bildende Polyurethan-System in die Vorform eingebracht ; nach Ablauf der Reaktion wird die einschichtige Elastomerhaut entformt und in die Endform eingelegt, die der Vorform vor dem "Auslegen" entspricht. In dieser Endform erfolgt dann die Fertigverarbeitung zum Formkörper.

Die nach diesem bekannten Verfahren hergestellten Elastomerhäute erweisen sich als schwindungsarm. Weitere Vorteile sind die freie Wählbarkeit der Oberflächenstruktur, eine gute Haptik durch einen hohen Weichheitsgrad der Oberfläche und das Fehlen mechanischer Spannungen. Allerdings haften diesem Verfahren auch Nachteile an. Als besonders ungünstig hat sich erwiesen, daß die danach hergestellten einschichtigen Elastomerhäute unter extremen klimatischen Bedingungen nicht uv-beständig sind und daß Hinterschneidungen und enge tiefe Spalten nach wie vor Schwierigkeiten bereiten, da es in diesen Bereichen zu Anhäufungen des Polyurethans kommt, die sich nach der Fertigverarbeitung der Elastomerhaut zum Formkörper als vorstehende Erhöhungen durchdrücken. Auch sind dem "Auslegen" Grenzen gesetzt ; bei der in der offengelegten PCT-Anmeldung WO 87/00482 gezeigten Form behindern bsp. die — in der Zeichnung nicht dargestellten — Stirnseiten der Vorform das Herunterbiegen bzw. Abklappen von deren Längsseiten in der Nachbarschaft der Stirnseiten, so daß dort die beiden tiefen Spalten nicht aufklaffen, sondern eng und schmal und damit für das Spritzwerkzeug unzugänglich bleiben.

Als technologischer Hintergrund sind die DE-B-1112827, GB-A-1123702 und US-A-4681712 zu verstehen. Die DE-B-1112827 betrifft die Herstellung einer aus Mantel und Kopf mit Gewindeansatz bestehenden Tube aus Kunststoff ; dabei wird der Tubenmantel von der Tauchform durch Umstülpen abgenommen. Die GB-A-1123702 beschreibt ein Verfahren zur Herstellung von hohlen, nachgiebigen Kunststoffgegenständen wie bsp. Faltenbälgen, bei dem die Balghaut durch Aufsprühen einer Polyurethanschicht auf ein mit einem Trennmittel versehenes plastisch verformbares Modell erzeugt wird. Schließlich hat die US-A-4681712 ein Verfahren zur Ausbildung einer Kunstharzschicht auf einem Kunststoff-Formteil durch Aufsprühen zum Gegenstand.

Der Erfindung liegt die Aufgabe zugrunde, das In-Mould-Coating bzw. In-Mould-Painting derart weiterzuentwickeln, daß sich uv-beständige Elastomerhäute auch mit Hinterschneidungen und engen tiefen Spalten problemlos und absolut maßhaltig, d.h. insbesondere ohne Werkstoffanhäufungen an der Basis solcher Hinterschneidungen und Spalten, herstellen lassen. Das wird erfindungsgemäß dadurch erreicht, daß zwischen Trennmittel und Polyurethan-System ein Polyurethan-Lack vorgesehen wird, wobei die Vorform vor dem Einbringen der Schichten durch mindestens bereichsweise erfolgendes Umdrehen in eine Stellung überführt wird, in der ihre dem Spritzwerzeug zugewandte Seite eine im wesentlichen konvexe Krümmung aufweist, und daß die entformte Elastomerhaut vor ihrer Fertigverarbeitung in der Endform wieder zurückgedreht wird.

Das Vorsehen einer zusätzlichen Schicht aus Polyurethan-Lack hat mehrere Vorteile. Zunächst gewährleistet diese Lackschicht die uv-Beständigkeit der Elastomerhaut auch unter extremen klimatischen Bedingungen. Zwar könnten insoweit auch andere Lacke verwendet werden, doch sind Polyurethan-Lacke sehr umweltfreundlich und gehen mit der Polyurethan-System-Schicht aufgrund chemischer Reaktion eine unlösbare Verbindung ein. Handelt es sich um einen Anwendungsfall, bei dem es auf die uv-Beständigkeit nicht ankommt, können andere Eigenschaften der Lackschicht (z.B. Reißdehnung) optimiert werden. Weiter ist die Oberflächenbeschaffenheit der mit einer solchen Lackschicht versehenen Elastomerhaut besser als die der bekannten Einschicht-Elastomerhäute, weil der dünnflüssige und sehr dünn aufgetragene Polyurethan-Lack in der Vorform einen in sich geschlossenen porenfreien Film bildet, der Poren der dahinter liegenden Polyurethan-System-Schicht zudeckt. In diesem Zusammenhang ist auch darauf hinzuweisen, daß Überdehnungen der Elastomerhaut bei großer Schichtdicke des Polyurethan-Systems und/oder bei Krümmungen mit sehr kleinen Radien zu Einkerbungen bis hin zu Rissen in der Polyurethan-System-Schicht führen, die ohne Vorhandensein einer überdeckenden Lackschicht verschmutzten und bis zur völligen Durchtrennung weiterreißen würden. Schließlich schafft die Lackschicht die Voraussetzung dafür, daß die beim Umdrehen der Vorform und beim Zurückdrehen der entformten Elastomerhaut auftretenden Beanspruchungen keine Beschädigungen hervorrufen ; die der Lackschicht innewohnende Elastizität fängt diese Beanspruchungen auf.

Das Überführen der Vorform in eine Stellung, in der ihre dem Spritzwerkzeug zugewandte Seite eine im wesentlichen konvexe Krümmung aufweist, schafft eine gleichbleibend gute Zugänglichkeit des Spritzwerkzeugs zu allen, also auch den hinterschnittenen oder tief eingemuldeten Bereichen der Vorform, so daß ein durchgehend gleichmäßiger Auftrag sowohl der Lackals auch der Polyurethan-System-Schicht möglich ist. Darüber hinaus beitet diese Verfahrensmaßnahme jedoch weitere Vorteile. So kann bsp. durch eine bereichsweise Abdeckung der dem Spritzwerkzeug zugewandten Seiten der Vorform mittels Masken eine Mehrfarbigkeit der Elastomerhaut erzielt werden. Auch ist es möglich, die nach dem Entformen zurückgedrehte Elastomerhaut noch einmal örtlich definiert zu beschichten und so einem etwaigen Auffederungsbegehren (Memoryeffekt) zu begegnen.

In weiterer ausgestaltung der Erfindung wird der Mehrschichtaufbau Polyurethan-Lack und Polyurethan-System der Elastomerhaut auch für die Vorform gewählt, die eine negative Elastomerhaut darstellt. Diese Vorform wird am Arbeitsmodell durch Auftrag mittels Spritzroboter mit stets gleichbleibenden Schichtdicken hergestellt, wobei im Zuge des späteren Umdrehens auftretende Abwicklungstoleranzen berücksichtigt werden können. Diese Vorform wird auf einer Dauerstützform befestigt verwendet. Sie stellt ein Wegwerferzeugnis dar, das bei Verschleiß der strukturierten Oberfläche sofort durch eine neue, vom Arbeitsmodell abgenommene und daher eine jungfräuliche Oberfläche aufweisende negative Elastomerhaut ersetzt werden kann. Änderungen der strukturierten Oberfläche sind dabei im Vergleich zu Galvanoformen schnell und kostengünstig durchführbar. Durch maßgenauen Dickenauftrag bei der Vorform und der Elastomerhaut ist eine stets gleichbleibende Passung bei der späteren Hinterfüllung gewährleistet. Selbstverständlich kann die Vorform jedoch auch aus Gummi, Silikon, Kunstharz oder Metall (Galvanoform) bestehen, was jedoch wesentlich teurer als die erfindungsgemäß vorgeschlagene Lösung ist.

Es hat sich als vorteilhaft herausgestellt, das Umdrehen der Vorform nur in solchen Bereichen durchzuführen, die keine Radien < 4 mm aufweisen, und bei Radien < 4 mm aufweisenden Bereichen das Umdrehen der Vorform hinter der Radiusauslauflinie einsetzen zu lassen.

Gemäß einem weiteren Merkmal der Erfindung werden die beim Umdrehen der Vorform auftretenden Abwicklungstoleranzen beim Arbeitsmodell kompensiert, wobei die Kompensation zweckmäßigerweise durch manuelle Bearbeitung, CAD/CAM oder Digitalisieren der betroffenen Teilbereiche des Urmodells erfolgt. Die manuelle Bearbeitung kann dabei ähnlich wie bei Tiefziehstempeln an den Eckbereichen vorgenommen werden ; beim Digitalisieren ist eine prozentuale Korrektur in drei verschiedenen Achsen z.B. mit einer Fidia-Steuerung, denkbar.

Für Kunststoff-Formkörper, die am Kraftfahrzeug außen angebracht bzw. Witterungseinflüssen ausgesetzt sind, hat es sich als günstig erwiesen, zwischen Trennmittel und Polyurethan-Lack eine farblose, lichtbeständige, schlag- und chemikalienfeste Primärschicht aus einem aliphatischen Zwei-Komponenten-Polyurethan-System einzubringen. Diese Verfahrensmaßnahme empfiehlt sich vor allem dann, wenn der Polyurethan-Lack als Metallic-Lack ausgebildet ist, als Korrosionsschutz für den Metallic-Bestandteil.

Um das Trennmittel fortfallen lassen zu können, ist gemäß einem weiteren Merkmal der Erfindung vorgesehen, als Polyurethan-Lack einen selbsttrennenden Lack zu verwenden.

In der Zeichnung ist — stark vereinfacht — der Ablauf des erfindungsgemäßen Verfahrens beispielhaft dargestellt.

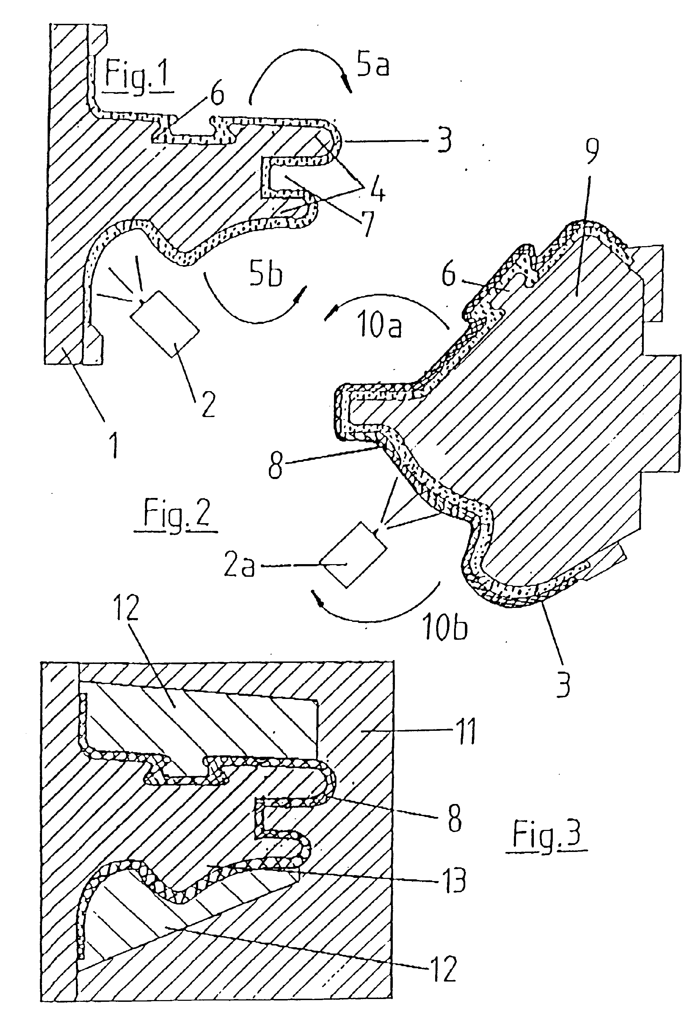

In Fig. 1 ist ein Arbeitsmodell 1 gezeigt, auf dem mittels eines Spritzroboters 2 eine Vorform 3 ausgebildet worden ist, die eine negative Elastomerhaut darstellt. Mit 4 sind diejenigen Bereiche der Vorform 3 bezeichnet, um welche deren Schenkel beim Umdrehen in Richtung der Pfeile 5a und 5b verschwenkt werden.

Fig. 2 zeigt die Vorform 3 nach dem Umdrehen. In dieser Stellung ist die in Fig. 1 dem Arbeitsmodell 1 zugekehrte Seite der Vorform 3 nach außen "gekrempelt", wobei allerdings die beiden Radien < 4 mm aufweisenden Bereiche 6 und 7 unverändert gelassen worden sind ; diese Seite der Vorform 3 ist nun dem Spritzroboter 2a zugewandt und läßt inbezug auf diesen eine im wesentlichen konvexe, überall gut zugängliche Krümmung erkennen. Mittels des Spritzroboters 2a wird ein gleichmäßiger Polyurethan-Schichtaufbau 8 auf der Vorform 3 ausgebildet, die rückseitig mit einem formstabilen Träger 9 ausgesteift ist ; dieser eine Dauerstützform bildende Träger 9 ist zwecks Beschleunigung des Reaktionsvorgangs beheizt. Nach Ablauf der Reaktion ist der Polyurethan-Schichtaufbau 8 zur Elastomerhaut geworden.

Diese Elastomerhaut 8 läßt sich aufgrund der ihr innewohnenden Elastizität ohne weiteres entformen, d.h. von dem Träger 9 abnehmen, und dann in Richtung der Pfeile 10a und 10b zurückdrehen. Nach dem Zurückdrehen der Elastomerhaut 8 besitzt diese eine der Endform 11 in Fig. 3 genau entsprechende Form. In Fig. 3 ist die zurückgedrehte Elastomerhaut 8 in die Endform 11 eingelegt dargestellt, die mitsamt der Schieber bzw. Losteile 12 direkt oder indirekt vom Urmodell abgenommen ist. In dieser Endform 11 wird die Elastomerhaut 8 durch Einführen von Werkstoff 13 in ihren Innenraum hinterfüllt und zum Formkörper fertigverarbeitet.

**Patentansprüche**

1. Verfahren zur Herstellung von Elastomerhäuten (8) als Verkleidungsmaterial für Kunststoff-Formkörper, z.B. Kraftfahrzeug-Armaturentafeln, bei dem in eine von einem Arbeitsmodell (1) abgenommene Vorform (3) zunächst ein Trennmittel und dann ein Polyurethan-System eingebracht wird, dem zwecks Bildung einer handhabbaren, lagerstabilen Elastomerhaut (8) vernetzungsfördernde und vernetzend wirkende Mittel beigegeben werden, wobei nach Ablauf der Reaktion die Elastomerhaut (8) entformt und in einer Endform (11) zu einem Kunststoff-Formkörper fertigverarbeitet, wird, **dadurch gekennzeichnet, daß** zwischen Trennmittel und Polyurethan-System ein Polyurethan-Lack vorgesehen wird, wobei die Vorform (3) vor dem Einbringen der Schichten durch mindestens bereichsweise erfolgendes Umdrehen in eine Stellung überführt wird, in der ihre dem Spritzwerkzeug (2a) zugewandte Seite eine im wesentlichen konvexe Krümmung aufweist, und daß die entformte Elastomerhaut (8) vor ihrer Fertigverarbeitung in der Endform (11) wieder zurückgedreht wird.

2. Verfahren nach Anspruch 1, **dadurch gekennzeichnet, daß** der Mehrschichtaufbau Polyurethan-Lack und Polyurethan-System der Elastomerhaut (8) auch für die Vorform (3) gewählt wird, die eine negative Elastomerhaut darstellt.

3. Verfahren nach den Ansprüchen 1 und 2, **dadurch gekennzeichnet, daß** das Umdrehen der Vorform (3) nur in solchen Breichen durchgeführt wird, die keine Radien < 4 mm aufweisen.

4. Verfahren nach Anspruch 3, **dadurch gekennzeichnet, daß** bei Radien < 4 mm aufweisenden Bereichen das Umdrehen der Vorform (3) hinter der Radiusauslauflinie einsetzt.

5. Verfahren nach Anspruch 1 und mindestens einem der Ansprüche 2-4, **dadurch gekennzeichnet,** daß die beim Umdrehen der Vorform (3) auftretenden Abwicklungstoleranzen beim Arbeitsmodell (1) kompensiert werden.

6. Verfahren nach Anspruch 5, **dadurch gekennzeichnet,** daß die Kompensation durch manuelle Bearbeitung, CAD/CAM oder Digitalisierung der betroffenen Teilbereiche der Urmodells erfolgt.

7. Verfahren nach Anspruch 1 und mindestens einem der Ansprüche 2-6, **dadurch gekennzeichnet,** daß zwischen Trennmittel und Polyrethan-Lack eine farblose, lichtbeständige, schlag- und chemikalienfeste Primärschicht aus einem aliphatischen Zwei-Komponenten-Polyurethan-System eingebracht wird.

8. Verfahren nach Anspruch 1 und mindestens einem der Ansprüche 2-7, **dadurch gekennzeichnet,** daß als Polyurethan-Lack ein selbsttrennender Lack verwendet wird.

## Claims

1. A method for the manufacture of elastomer skins (8) as coating material for plastic mould bodies, e.g. motor vehicle fascias, in which first a parting agent and then a polyurethane system is introduced into a preliminary mould (3) removed from a working model (1), to which agents which promote cross-linking and which have a cross-linking effect are added to form an elastomer skin (8) which can be handled and is stable in storage, wherein the elastomer skin (8) is removed from the mould at the end of the reaction and is finished in a final mould (11) to form a plastic mould body, characterised in that a polyurethane varnish is provided between the parting agent and the polyurethane system, wherein the preliminary mould (3) is transfered, before the layers are introduced, by rotation at least in certain regions, into a position in which its side facing towards the spraying tool (2a) has a substantially convex curvature, and in that the unmoulded elastomer skin (8) is rotated back again before being finished in the final mould (11).

2. A method according to claim 1, characterised in that the multilayer structure of polyurethane varnish and polyurethane system of the elastomer skin (8) is also selected for the preliminary mould (3) representing a negative elastomer skin.

3. A method according to claims 1 and 2, characterised in that the preliminary mould (3) is only rotated in those regions with no radii < 4 mm.

4. A method according to claim 3, characterised in that in regions with radii < 4 mm the rotation of the preliminary mould (3) begins behind the continuation line of the radius.

5. A method according to claim 1 and at least one of claims 2-4, characterised in that the unwinding tolerances occuring when the preliminary mould (3) is rotated are compensated for in the working model (1).

6. A method according to claim 5, characterised in that compensation is effected by manual processing, CAD/CAM or digitalisation of the relevant part regions of the original model.

7. A method according to claim 1 and at least one of claims 2-6, characterised in that introduced between the parting agent and the polyurethane varnish is a colourless, light-fast, impact- and chemical-resistant primary layer consisting of an aliphatic two-component polyurethane system.

8. A method according to claim 1 and at least one of claims 2-7, characterised in that a self-parting varnish is used as the polyurethane varnish.

## Revendications

1. Procédé pour la fabrication de peaux élastomères (8) comme matériau de recouvrement pour pièces moulées de matière plastique, par exemple des tableaux de bord d'automobiles, dans lequel on introduit d'abord dans une préforme (3) prise d'un modèle de travail (1) un agent de démoulage et ensuite un système de polyuréthanne, auquel on ajoute des accélérateurs de réticulation et des agents réticulants pour former une peau élastomère (8) manipulable, stable au stockage, après la réaction, on démoule la peau élastomère (8) et on la façonne dans un moule final (11) en une pièce moulée de matière plastique, caractérisé en ce qu'un vernis de polyuréthanne est prévu entre l'agent de démoulage et le système de polyuréthanne, la préforme (3) étant placée avant la mise en place des couches, par rotation s'effectuant au moins par zones, dans une position dans laquelle son côté tourné vers l'outil de pulvérisation (2a) présente une courbure essentiellement convexe, et en ce que la peau élastomère (8) moulée est à nouveau retournée avant son façonnage dans le moule final (11).

2. Procédé selon la revendication 1, caractérisé en ce que la structure multicouche de vernis de polyuréthanne et de système de polyuréthanne de la peau élastomère (8) est choisie aussi pour la préforme (3) qui constitue une peau élastomère négative.

3. Procédé selon les revendications 1 et 2, caractérisé en ce que la rotation de la préforme (3) n'est mise en oeuvre que dans les zones qui ne présentent pas de diamètres < 4 mm.

4. Procédé selon la revendication 3, caractérisé en ce que dans les domaines présentant des rayons < 4 mm la rotation de la préforme (3) démarre en arrière de la courbe de dépassement de rayon.

5. Procédé selon la revendication 1 et l'une au moins des revendications 2 à 4, caractérisé en ce que les tolérances de développement apparaissant dans la rotation de la préforme (3) sont compensées par le modèle de travail (1).

6. Procédé selon la revendication 5, caractérisé en ce que la compensation s'effectue par façonnage à la main, par conception et fabrication assistées par ordinateur ou par digitalisation des domaines partiels concernés du prémodèle.

7. Procédé selon la revendication 1 et l'une au moins des revendications 2 à 6, caractérisé en ce que l'on introduit entre l'agent de démoulage et le vernis de polyuréthanne une couche primaire incolore, résistante à la lumière, aux chocs et aux agents chimiques, d'un système de polyuréthanne aliphatique à deux composants.

8. Procédé selon la revendication 1 et l'une au moins des revendications 2 à 7, caractérisé en ce que l'on utilise comme vernis de polyuréthanne un vernis autoséparable.

Fig.1

Fig.2

Fig.3